# EUROPÄISCHE PATENTSCHRIFT

(11) **EP 0 342 663 B1**
(45) Veröffentlichungstag und Bekanntmachung des Hinweises auf die Patenterteilung: **11.09.1996**
(21) Anmeldenummer: 89108923.7
(22) Anmeldetag: 18.05.1989
(51) Int. Cl.: G02B 6/44, G02B 6/00

(54) **Mit einer Lichtwellenleiter-Ader hergestellter Wickel**
Bobbin produced with a lightwave guide cable
Bobine construite avec un guide d'onde optique en forme de câble

(30) Priorität: 19.05.1988 DE 3817030; 14.12.1988 DE 3842036
(43) Veröffentlichungstag der Anmeldung: 23.11.1989
(73) Patentinhaber: Alcatel Kabel AG & Co., D-30179 Hannover (DE)
(72) Erfinder: Znoyek, Gerald, D-5090 Leverkusen 1 (DE); Kölschbach, Veit, D-5000 Köln 90 (DE); Wenzel, Norbert, Dr., D-5060 Bergisch-Gladbach (DE); Schütten, Dagmar, D-5042 Erftstadt 1 (DE); Caspar, Hans-Peter, D-5210 Troisdorf (DE); Schmitz, Hans-Joachim, D-5014 Kerpen (DE)
(74) Vertreter: Mende, Eberhard, Dipl.-Ing.

(56) Entgegenhaltungen:
- DE-A- 2 012 293
- DE-B- 1 209 839
- FR-A- 2 586 826
- GB-A- 2 057 707

## Beschreibung

Die Erfindung bezieht sich auf einen mit einer eichtwellenleiter-Ader -Ader (LWL-Ader) hergestellten Wickel, insbesondere zur Übertragung optischer Signale von bzw. zu einem sich fortbewegenden Körper.

Bei einer durch die DE-OS 20 12 293 bekannten Anordnung ist eine mit einer LWL-Ader gewickelte Spule in einem raketengetriebenen Flugkörper angeordnet. Auf derartigen Spulen muß in einem möglichst kleinen Volumen eine große Vorratslänge der LWL-Ader aufgewickelt sein, welche mit hoher Geschwindigkeit abwickelbar sein muß, ohne daß dabei Schlingen oder Knoten entstehen.

Die Spule muß äußerst sorgfältig gewickelt sein, so daß ein störungsfreier schneller Abwickelvorgang möglich ist. Weder im aufgewickelten Zustand noch beim Abwickeln dürfen die optischen Eigenschaften der LWL-Ader unzulässig beeinträchtigt werden. Für gebräuchliche LWL darf ein Krümmungsradius von etwa 15 mm nicht unterschritten werden.

Der Erfindung liegt die Aufgabe zugrunde, bei einer Spule der eingangs genannten Art einen einwandfreien Wickelaufbau und einen störungsfreien Abwickelvorgang zu gewährleisten. Die infolge des Wickelvorgangs auftretenden zusätzlichen Dämpfungen der LWL-Ader sollen möglichst klein sein.

Die Lösung ist in Anspruch 1 beschrieben. Ein Merkmal der Lösung ist daß die LWL-Ader zu einem wickelkörperlosen selbsttragenden Kreuzwickel gewickelt ist.

Bei der erfindungsgemäßen Anordnung kann die LWL-Ader von den Innenlagen des nicht rotierenden Wickels besonders schnell abgezogen werden. Auch ohne einen Wickelkörper hat der erfindungsgemäße freitragende Kreuzwickel auch ohne Spulenkörper einen festen Zusammenhalt. Der Kreuzwickel kann mit einem besonders gut geordneten Aufbau hergestellt werden, wenn der LWL der LWL-Ader eine Hülle aufweist, welche im Verband des Kreuzwickels, insbesondere an den Kreuzungsstellen der Windungen eine in Richtung der Wickelebene verbreiterte abgeflachte Querschnittskontur aufweist.

Gemäß der Lösung ist vorgesehen, daß die Hülle der LWL-Ader im Ausgangszustand eine längliche Querschnittsform aufweist. Eine verbreiterte Querschnittsform ergibt sich zwangsläufig dann, wenn neben dem LWL ein Zusatzelement etwa gleichen Querschnitts angeordnet ist, insbesondere ein weiterer LWL, welcher dann ebenfalls zur Nachrichtenübertragung genutzt werden kann. Ein zusätzliches Element könnte auch aus einem insbesondere zugfesten Kunststoff oder aus Metall bestehen. Vorteilhaft ist es, einen solchen Werkstoff zu wählen, welcher zumindest angenähert gleiche physikalische Kennwerte (E-Modul, Temperaturverhalten und Abmessungen) wie der LWL aufweist.

Zu starke nach außen gerichtete Ausbuchtungen der breiteren Seitenfläche der LWL-Ader können dadurch vermieden werden, daß die Hülle mit Unterdruck extrudiert ist.

Eine einfach herstellbare Lösung ist dadurch gekennzeichnet, daß der Wickel mit einer LWL-Ader gewickelt ist, deren kreisrunde Hülle einen E-Modul von kleiner als 1 GPa aufweist, wie insbesondere thermoplastisches Polyurethan oder Weich-Polyvinylchlorid. Die ursprünglich kreisrunde Hülle verformt sich beim Wickelvorgang in die gewünschte flache Form.

Gemäß einer besonders vorteilhaften Lösung ist vorgesehen, daß der LWL mit Abstand von einer schlauchartigen Hülle umgeben ist. Dabei ergibt sich selbst bei Verwendung von härteren Werkstoffen für die Hülle beim Wickelvorgang die gewünschte flache Querschnittskontur. Dabei wird bevorzugt, daß zwischen die schlauchartige Hülle und den LWL eine gelartige Masse eingebracht ist. Eine die an sich bekannten Vorteile aufweisende gelartige Masse läßt dabei die gewünschte Verformung der schlauchartigen Hülle zu einer flachen Querschnittskontur zu. Im Gegensatz zu einer festen Umhüllung der LWL werden bei der letztgenannten Lösung geringere Dämpfungserhöhungen verursacht. Für die Kunststoffhülle können relativ harte Werkstoffe verwendet werden wie insbesondere Polybutylenterephthalat und elastomer-modifiziertes polybutylenterephthalat. Auch Polyamide haben sich als vorteilhaft geeignet erwiesen.

Es ist ohne weiteres möglich, daß innerhalb der Hülle zusätzlich mindestens ein Zugentlastungselement, insbesondere in Form mindestens eines faserartigen Elements angeordnet ist.

Eine vorteilhafte Möglichkeit, die LWL-Ader in ihrer Lage im Wickel zu fixieren, besteht darin, daß innerhalb der Hülle zusätzlich ein sich beim Wickelvorgang plastisch verformender Metalldraht angeordnet ist.

Die Lagesicherung der LWL-Adern im Wickel wird weiterhin dadurch erhöht, daß der Reibungskoeffizient der Hülle größter als µ = 0,3 ist. Zusätzlich können die Haltekräfte polarer Werkstoffe (z.B. Polyurethan) zum Zusammenhalt des Wickels beitragen.

Besonders geringe Dämpfungserhöhungen der gewickelten LWL-Ader ergeben sich dadurch, daß der lichte Abstand zwischen zwei benachbarten Windungen von LWL-Adern das 1-bis 4- fache, vorzugsweise das 1- bis 2- fache des mittleren Durchmessers der LWL-Ader beträgt.

Es hat sich gezeigt, daß der Steigungswinkel α der LWL-Ader relativ zu einer Querschnittsebene des Kreuzwickels aus Stabilitätsgründen möglichst groß sein sollte, andererseits aber möglichst klein, um unzulässige Dämpfungserhöhungen der LWL-Ader zu vermeiden. Deshalb ist vorgesehen, daß der Steigungswinkel α einer LWL-Ader-Windung relativ zu einer Querschnittsebene der Kreuzspule in jeder Wickellage im Bereich von 2^{o} bis 30^{o}, vorzugsweise im Bereich von 4^{o} bis 10^{o} liegt.

Ein für diese Ausführungsform vorteilhaftes Herstellungsverfahren ist dadurch gekennzeichnet, daß in Abhängigkeit vom beim Wickelvorgang erreichten jeweiligen Durchmesser des Kreuzwickels der Steigungswinkel α derart nachgestellt wird, daß er im Bereich von 2^{o} bis 30^{o}, vorzugsweise im Bereich von 4^{o} bis 10^{o} liegt.

Die Nachstellung des Steigungswinkels erlaubt es, auch Spulen mit hohen Lagezahlen unter Einhaltung der vorgenannten Grenzen für den Steigungswinkel α herzustellen. Derart wird verhindert, daß der Steigungswinkel α mit zunehmendem Wickeldurchmesser stetig abnimmt, wodurch der Wickel instabil würde. Beim Abwickelvorgang der LWL-Ader von einem nicht drehenden Wickel entstehen Torsionen in der LWL-Ader. Deshalb ist vorgesehen, daß die LWL-Ader im Wickel über die gesamte Länge mit einer Torsion gewickelt ist. Bei der Herstellung des Wickels wird dabei eine gegenkompensierende Torsion aufgebracht. Dabei wird vorteilhafterweise die Torsion des Wickels mit einem derart geringen Ausmaß bewirkt, daß die beim Abwickelvorgang auf die LWL-Ader aufgebrachte Torsion nur teilweise kompensiert wird, damit weder die gewickelte noch die abgewickelte Ader eine zu hohe Torsion aufweist.

Es hat sich ferner als vorteilhaft erwiesen, daß die Torsion in verschiedenen radialen Wickellagen oder Bereichen von Wickellagen unterschiedlich ist. Der Torsionswinkel pro Längeneinheit der LWL-Ader nimmt mit Vergrößerung des Durchmessers einer Wickellage ab.

Die Erfindung wird anhand der Beschreibung von in der Zeichnung dargestellten vorteilhaften Ausführungsbeispielen näher erläutert.
- Fig. 1: zeigt die Seitenansicht einer erfindungsgemäßen Kreuzspule, zur Hälfte geschnitten.
- Fig. 2: zeigt den Querschnitt einer LWL-Ader, welche im Ausgangszustand eine verbreiterte Umhüllung aufweist.
- Fig. 3: zeigt den Querschnitt einer LWL-Ader mit im Ausgangszustand kreisrunder weicher Runststoffumhüllung.
- Fig. 4: zeigt eine sich im gewickelten Zustand einstellende Querschnittsform einer mit einer Gelzwischenschicht und einer Kunststoffhülle umgebenen LWL-Ader.

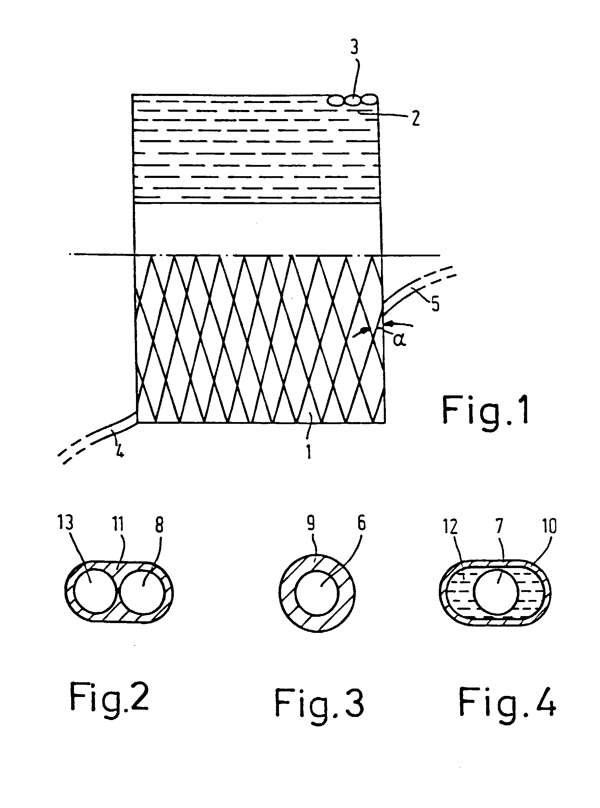

Bei dem in Figur 1 schematisch und nicht maßstäblich gezeichneten Kreuzwickel ist in der unteren Hälfte der für einen Kreuzwickel typische Verlauf der Windungen einer LWL-Ader 1 erkennbar, welche mit einem Steigungswinkel gewickelt sind. In der im Längsschnitt angedeuteten oberen Hälfte sind durch gestrichelte Linien 2 Wickelebenen einer Vielzahl von radial übereinanderliegenden Wickellagen angedeutet. Von der äußersten Wickellage sind Querschnittsformen 3 der LWL-Ader 1 erkennbar. Die breiteren Querschnittsseiten erstrecken sich in Richtung der Ebenen ihrer Wickellage.

Wenn die Kreuzspule in einem sich fortbewegenden Körper angeordnet ist, wird das Ende 4 der optischen Ader 1 mit einem Sender und/oder einem Empfänger des Körpers optisch gekoppelt. Das Ende 5 wird beispielsweise mit einer stationären Sende-/Empfangseinheit gekoppelt. Entsprechend der Geschwindigkeit des zu bewegenden Körpers wird die LWL-Ader 1 vom Inneren des Kreuzwickels her ausgezogen.

Besonders niedrige Dämpfungen ergeben sich dann, wenn zwischen zwei benachbarten LWL-Ader-Windungen ein Abstand vom 1- bis 2-fachen des mittleren Aderdurchmessers eingehalten wird. Größere Werte als das 4- fache des mittleren Aderdurchmessers erbringen diesbezüglich keinen nennenswerten Vorteil.

Der Steigungswinkel α der Aderwindungen gegenüber einer Querschnittsebene des Kreuzwickels wurde in allen Lagen auf einen von 8^{o} nur wenig abweichenden Wert eingestellt. Dabei wurde das Verhältnis der Wickeldrehzahl und der Geschwindigkeit der axialen Führung der LWL-Ader in ständiger Anpassung geändert, so daß der Winkel α innerhalb des Bereiches von 4^{o} bis 10^{o} gehalten wurde.Eine solche Anpassung kann stetig erfolgen. Sie erfolgte im bevorzugten Ausführungsbeispiel stufig nach Herstellung jeweils einiger Wickellagen, da ein gewisser Schwankungsbereich des Steigungswinkels α erlaubt ist.

Verschiedene Querschnittsformen einer LWL-Ader 1 sind gegenüber Position 3 nach Fig. 1 vergrößert in den Figuren 2,3 und 4 erkennbar. Die LWL 6,7 bzw. 8 haben einschließlich ihres Kunststoffcoatings einen Durchmesser von etwa 250 µm. Sie sind von aufextrudierten Hüllen 9,10 bzw. 11 umgeben.

Bei der Ausführungsform nach Fig. 2 ist parallel zum LWL 8 ein Element 13 gleicher Querschnittsform in der Kunststoffhülle 11 angeordnet. Es ergibt sich eine abgeflachte Querschnittsform, welche das Wickeln einer gleichmäßigen Kreuzspule erleichtert.

Diese Element 13 kann ein weiterer LWL sein, durch welchen zusätzlich eine Nachrichtenübertragung möglich ist. Man kann jedoch auch eine lediglich zugfeste und nicht als Wellenleiter ausgelegte Glasfaser verwenden, ebenso wie andersartige Zugentlastungselemente wie z.B. Kevlar-Rovings oder auch Metalldrähte. Bevorzugt sollten Elemente verwendet werden, deren physikalischen Kennwerte (E-Modul, Temperaturverhalten und Abmessungen) möglichst wenig von denen des LWL 8 abweichen.

Als besonders geeignet hat sich ein plastisch verformbarer Metalldraht erwiesen. Dieser hält die Wickellage der Ader nach Fig. 2 entgegen der elastischen Rückstellkräfte des LWL 8 auch an Umkehrstellen der Wickelsteigung bei, selbst wenn die Oberfläche der Kunststoffhülle 11 relativ glatt und kleberfrei ist.

Damit bei der Extrusion der Hülle 11 sich deren breiteren Seitenflächen nicht so sehr nach außen wölben, ist es bei der Ausführung nach Fig. 2 vorteilhaft, mit Unterdruck zu extrudieren. Dann können sogar für das Wickeln des Kreuzwickels günstige nach innen gerichtete Einwölbungen erzeugt werden.

Bei der Ausführungsform einer LWL-Ader nach Fig. 3 ist der LWL 6 lediglich von einer besonders weichen und nicht zu dünnen Kunststoffhülle umgeben, welche beim Wickeln der Kreuzspule in einen länglichen Querschnitt ähnlich den Figuren 2 und 4 verformt wird, so daß zumindest annähernd gleich gute Wickelergebnisse erzielt werden, wie bei einer bereits ursprünglich vorhandenen länglichen Querschnittsform.

Für die Hülle 9 haben sich Kunststoffe mit einem E-Modul von weniger als 1 GPa als vorteilhaft geeignet erwiesen. Deshalb wurden insbesondere thermoplastisches Polyurethan oder Weich-Polyvinylchlorid verwendet.

Dabei sind Außendurchmesser der Hülle 9 von weniger als 1mm anzustreben. Bei zu dicken LWL-Adern ist natürlich die in einer Volumeneinheit einer Kreuzspule unterzubringende Länge der Ader klein.

Bei der Abwandlung nach Fig. 4 können steifere Hüllen 10 verwendet werden, da die Nachgiebigkeit der Querschnittsform durch eine gelartige Zwischenschicht 12 erreicht wird, welche zusätzlich die Dämpfungserhöhungen des LWL verhindert.

In Fig. 4 ist die sich im Kreuzwickel einstellende Querschnittsform angedeutet. Ursprünglich wurde um den LWL 7 eine diesen konzentrisch umgebende kreisrunde Kunststoffhülle 12 extrudiert.

Wenn der Reibungskoeffizient der Hülle 9 oder der Hülle 12 größer als µ = 0,3 ist, hält der Kreuzwickel auch ohne Kleberbeschichtung der Adern hervorragend zusammen und läßt sich störungsfrei mit hoher Geschwindigkeit abwickeln.

## Patentansprüche

1. Wickel, der aus einer Lichtwellenleiter-Ader hergestellt ist welche insbesondere zur Übertragung optischer Signale von bzw. zu einem sich fortbewegenden Körper dient,
dadurch gekennzeichnet, daß die Lichtwellenleiter-Ader (1) zu einem wickelkörperlosen selbsttragenden Kreuzwickel gewickelt ist und daß die Lichtwellenleiter-Ader (1) eine Hülle (9,10,11) aufweist, welche im Verband des Kreuzwickels, insbesondere an den Kreuzungsstellen der Windungen, eine in Richtung der Wickelebene verbreiterte abgeflachte Querschnittskontur aufweist.

2. Wickel nach Anspruch 1,
dadurch gekennzeichnet, daß die Hülle (11) die Lichtwellenleiter-Ader (1) im Ausgangszustand eine längliche Querschnittsform aufweist.

3. Wickel nach Anspruch 2,
dadurch gekennzeichnet, daß neben dem Lichtwellenleiter (8) ein Zusatzelelement (13) etwa gleichen Querschnitts, insbesondere ein weiterer Lichtwellen leiter, angeordnet ist.

4. Wickel nach Anspruch 2 oder 3
dadurch gekennzeichnet, daß die Hülle (11) mit Unterdruck extrudiert ist.

5. Wickel nach Anspruch 1,
dadurch gekennzeichnet, daß er mit einer Lichtwellenleiter-Ader (1) gewickelt ist, deren (9) im Ausgangszustandkreisrund ist und einen E-Modul von kleiner als 1 GPa aufweist.

6. Wickel nach Anspruch 5,
dadurch gekennzeichnet, daß die Hülle (9) aus thermoplastischem Polyurethan oder Weich-Polyvinylchlorid besteht.

7. Wickel nach Anspruch 1,
dadurch gekennzeichnet, daß der Lichtwellenleiter (7) mit Abstand von einer schlauchartigen Hülle (10) umgeben ist.

8. Wickel nach Anspruch 7,
dadurch gekennzeichnet, daß zwischen die schlauchartige Hülle (10) und den Lichtwellenleiter eine gelartige Masse (12) eingebracht ist.

9. Wickel nach Anspruch 7 oder 8,
dadurch gekennzeichnet, daß die schlauchartige Hülle (10) aus Polybutenterephthalat oder elastomer modifiziertem Polybutylenterephthalat besteht.

10. Wickel nach einem der Ansprüche 1 bis 9,
dadurch gekennzeichnet, daß innerhalb der Hülle (9,10,11) zusätzlich mindestens ein Zugentlastungselement, insbesondere in Form mindestens eines faserartigen Elements angeordnet ist.

11. Wickel nach einem der Ansprüche 1 bis 10,
dadurch gekennzeichnet, daß innerhalb der Hülle (9,10,11) zusätzlich ein sich beim Wickelvorgang plastisch verformender Metalldraht (13) angeordnet ist.

12. Wickel nach einem der Ansprüche 1 bis 11,
dadurch gekennzeichnet, daß der Reibungskoeffizient zwischen Hülle und Hülle (9,10,11) größer als µ = 0,3 ist.

13. Wickel nach einem der Ansprüche 1 bis 12,
dadurch gekennzeichnet, daß der lichte Abstand zwischen zwei benachbarten Windungen von Lichtwellenleiter-Adern (1) das 1- bis 4- fache, vorzugsweise das 1- bis 2- fache des mittleren Durchmessers der Ader (1) beträgt.

14. Wickel nach einem der Ansprüche 1 bis 13,
dadurch gekennzeichnet, daß die Ader (1) im Wickel über die gesamte Länge mit einer Torsion gewickelt ist.

15. Wickel nach Anspruch 14,
dadurch gekennzeichnet, daß die Torsion in verschiedenen radialen Wickellagen oder Bereichen von Wickellagen unterschiedlich ist.

16. Wickel nach Anspruch 15,
dadurch gekennzeichnet, daß der Steigungswinkel α einer Lichtwellenleiter-Ader-Windung relativ zu einer Querschnittsebene der Kreuzspule in jeder Wickellage im Bereich von 2° bis 30°, vorzugsweise im Bereich von 4° bis 10° liegt.

## Claims

1. Coil which is produced with an optical fibre wire, which is used in particular for the transmission of optical signals from or to a body which is moving away, characterized in that the optical fibre wire (1) is wound into a formerless, self-supporting cross-wound coil, and in that the optical fibre wire (1) has a sheath (9, 10, 11) which, in the assembly of the cross-wound core, in particular at the crossing points of the windings, has a cross-sectional contour which is broadened and flattened in the direction of the plane of the coil.

2. Coil according to Claim 1, characterized in that the sheath (11) on the optical fibre wire (1) has an elongated cross-sectional shape in the initial state.

3. Coil according to Claim 2, characterized in that an additional element (13) of approximately identical cross-section, in particular a further optical fibre, is arranged alongside the optical fibre (8).

4. Coil according to Claim 2 or 3, characterized in that the sheath (11) is extruded under reduced pressure.

5. Coil according to Claim 1, characterized in that it is wound using an optical fibre wire (1) whose sheath (9) is circular in the initial state and has a modulus of elasticity of less than 1 GPa.

6. Coil according to Claim 5, characterized in that the sheath (9) consists of thermoplastic polyurethane or plasticized polyvinyl chloride.

7. Coil according to Claim 1, characterized in that the optical fibre wire (7) is surrounded at a distance by a tube-like sheath (10).

8. Coil according to Claim 7, characterized in that a gel-like compound (12) is introduced between the tube-like sheath (10) and the optical fibre.

9. Coil according to Claim 7 or 8, characterized in that the tube-like sheath (10) consists of polybutylene terephthalate or elastomer-modified polybutylene terephthalate.

10. Coil according to one of Claims 1 to 9, characterized in that at least one strain-relief element, in particular in the form of at least one fibre-like element, is additionally arranged within the sheath (9, 10, 11).

11. Coil according to one of Claims 1 to 10, characterized in that a metal wire (13) which deforms plastically during the winding process is additionally arranged within the sheath (9, 10, 11).

12. Coil according to one of Claims 1 to 11, characterized in that the coefficient of friction between sheath and sheath (9, 10, 11) is greater than µ = 0.3.

13. Coil according to one of Claims 1 to 12, characterized in that the clear distance between two adjacent windings of optical fibre wires (1) is 1 to 4 times, preferably 1 to 2 times, the average diameter of the wire (1).

14. Coil according to one of Claims 1 to 13, characterized in that the wire (1) in the coil is wound with a torsion over the entire length.

15. Coil according to Claim 14, characterized in that the torsion is different in different radial coil layers or portions of coil layers.

16. Coil according to Claim 15, characterized in that the pitch angle α of an optical fibre wire winding, relative to a cross-sectional plane of the cross-wound coil, lies within the range from 2° to 30°, preferably in the range from 4° to 10°, in each coil layer.

## Revendications

1. Enroulement fabriqué avec un câble à fibres optiques, servant en particulier à la transmission de signaux optiques en provenance ou en direction d'un objet en mouvement, caractérisé en ce que le câble (1) à fibre optique est enroulé en un nid d'abeille autoporteur sans corps de bobine, et en ce que le câble (1) à fibre optique présente une gaine (9, 10, 11) qui présente dans le treillis du nid d'abeille, en particulier aux points de croisement des spires, un contour de section aplani élargi suivant la direction du plan d'enroulement.

2. Enroulement suivant la revendication 1, caractérisé en ce que la gaine (11) du câble (1) à fibre optique présente à l'état initial une forme de section oblongue.

3. Enroulement suivant la revendication 2, caractérisé en ce qu'à côté de la fibre optique (8) est disposé un élément additionnel (13) de section sensiblement identique, en particulier une autre fibre optique.

4. Enroulement suivant la revendication 2 ou 3, caractérisé en ce que la gaine (11) est extrudée avec une dépression.

5. Enroulement suivant la revendication 1, caractérisé en ce qu'il est enroulé avec un câble (1) à fibre optique dont la gaine (9) est circulaire à l'état initial, et qui présente un module d'élasticité inférieur à 1 GPa.

6. Enroulement suivant la revendication 5, caractérisé en ce que la gaine (9) est composée d'un polyuréthanne thermoplastique ou de chlorure de polyvinyle souple.

7. Enroulement suivant la revendication 1, caractérisé en ce que la fibre optique (7) est entourée, à une certaine distance, d'une gaine (10) tubulaire.

8. Enroulement suivant la revendication 7, caractérisé en ce qu'une masse du type gel est disposée entre la gaine (10) tubulaire et la fibre optique.

9. Enroulement suivant la revendication 7 ou 8, caractérisé en ce que la gaine (10) tubulaire est composée de polybutylène téréphtalate ou de polybutylène téréphtalate modifié à l'élastomère.

10. Enroulement suivant l'une des revendications 1 à 9, caractérisé en ce qu'au moins un élément de décharge de traction, en particulier sous la forme d'au moins un élément du type fibre, est disposé en outre à l'intérieur de la gaine (9, 10, 11).

11. Enroulement suivant l'une des revendications 1 à 10, caractérisé en ce qu'un fil métallique (13) subissant une déformation plastique lors de l'enroulage est disposé en outre à l'intérieur de la gaine (9, 10, 11).

12. Enroulement suivant l'une des revendications 1 à 11, caractérisé en ce que le coefficient de frottement entre la gaine et la gaine (9, 10, 11) est supérieur à µ=0,3.

13. Enroulement suivant l'une des revendications 1 à 12, caractérisé en ce que l'écart libre compris entre deux spires voisines de câbles (1) à fibre optique représente de une fois a quatre fois, de préférence de une fois à deux fois, le diamètre moyen du câble (1).

14. Enroulement suivant l'une des revendications 1 à 13, caractérisé en ce que le câble (1) est enroulé en un enroulement avec une torsion sur toute la longueur.

15. Enroulement suivant la revendication 14, caractérisé en ce que la torsion est différente dans différentes couches d'enroulement radiales ou zones de couches d'enroulement.

16. Enroulement suivant la revendication 1, caractérisé en ce que l'angle d'inclinaison α d'une spire de câble à fibres optiques est compris entre 2° et 30°, de préférence entre 4° et 10°, relativement à un plan de section de la bobine en nid d'abeille, dans chaque couche d'enroulement.
